## Europäisches Patentamt
## European Patent Office
## Office européen des brevets

(11) Publication number: **0 314 529**
A2

## EUROPEAN PATENT APPLICATION

(21) Application number: 88310240.2

(22) Date of filing: **31.10.88**

(51) Int. Cl.⁴: **B 60 J 7/04**
B 60 J 5/12, B 62 D 33/08

(30) Priority: **30.10.87 GB 8725439**

(43) Date of publication of application:
**03.05.89 Bulletin 89/18**

(84) Designated Contracting States:
**BE DE ES FR GB IT NL**

(71) Applicant: **YORK TRAILER COMPANY LIMITED**
**Yafforth Road**
**Northallerton North Yorkshire, DL7 8UE (GB)**

(72) Inventor: **Prescott, Paul Conway**
**40 Lark Lane**
**Ripon North Yorkshire, HG4 2HV (GB)**

(74) Representative: **Allen, Oliver John Richard et al**
**Lloyd Wise, Tregear & Co. Norman House 105-109 Strand**
**London, WC2R 0AE (GB)**

(54) Improvements in trailers and semi-trailers.

(57) A trailer or semi-trailer having a lifting roof so as to be able to facilitate easier loading and to have a higher capacity. The roof is supported at the four corners of the trailer by posts which are extendable on activation of a roof lifting mechanism. The side walls of the trailer may be curtains which can be attached to the roof so that when the roof is raised the curtain is raised and no gap appears between the curtain side from the roof. In accordance with the invention the gap which appears between the roof and the top of the rear face of the trailer is closed by a folding shutter which extends when the roof is in the raised position and which retracts when the roof is lowered.

## Description

### Improvements In Trailers and Semi-trailers

The invention relates to trailers and semi-trailers.

It has been proposed to fit such trailers and semi-trailers with a lifting roof. This facilitates easier loading and also allows the trailer to accomodate high capacity, low weight backloads while still complying with the legal height and weight requirements for such trailers. The roof is usually supported at the four corners of the trailer by posts which are extendable on activation of a roof lifting mechanism. The side walls of such trailers may be curtains which are generally attached to the roof by means of for example, runners engaging the roof cant rail, so that when the roof is raised the curtain is also raised and no gap appears between the curtain side walls and the roof of the trailer. The roof and front wall can be fitted with a curved aerofoil which lifts with the roof as described in our co-pending GB Applicaion No

However, at the rear of the trailer a gap is left between the back wall and the roof when the roof is in its raised position. Such a gap is highly undesirable since it exposes the load to the elements and gives the trailer poor aerodynamic characteristics when running. These problems could be overcome by fitting a very deep overlapping header rail on the inside surface of the roof along the rear end of the trailer but such a header is disadvantageous in that it takes up valuable loading height through the rear of the trailer.

A lifting roof trailer in accordance with the invention has a folding shutter which extends between the roof and the top of the rear wall of the trailer. This shutter may extend when the roof is in the raised position to cover the gap, and contract when the roof is lowered.

Preferably the shutter is arranged to be biased into the folded condition so that when the roof is in the lowered position it folds neatly.

The top of the folding shutter is preferably attached at each end to the top of an extendable portion of the rear corner pillars of the trailer. The extendable portion may, for example, be a stake rail fitted within each pillar and arranged to be raised relative to the pillar. The bottom end of the shutter may hang free.

The stake rails may engage a lifting header which runs between them along the rear of the trailer on which the roof is supported.

When the roof is in the lowered position with the stake rails retracted, the lifting header may rest upon a fixed header which is supported by and extends between the rear corner pillars.

Preferably the fixed header and the lifting header are so shaped and dimensioned that when the fixed header has the lifting header resting thereon a chamber is created into which the shutter neatly folds.

Preferably the shutter comprises a plurality of plates, each plate extending across the back of the trailer. The plates are joined by hinge members which may be made from flexible material, for example synthetic rubber. The plates may be made from reinforced PVC.

Preferably a bias is created by moulding the hinges in the shape they assume when the shutter is folded so that they bias the shutter into the folded condition.

When the roof lifting mechanism is operated, the stake rails within the rear corner pillars are raised, carrying with them the lifting header, the roof and the top plate of the folding shutter. The shutter is therefore caused to slowly unfold and extend across the gap created between the roof and the rear wall of the trailer.

The invention will now be described with reference to the accompanying drawings in which:

Figure 1 is a transverse sectional view through the fixed and lifting headers and the shutter as seen from the side of the trailer when the stake rail is in the lowered position;

Figure 2 is a sectional view as in Figure 1 but on a reduced scale with the stake rail raised and the shutter fully extended.

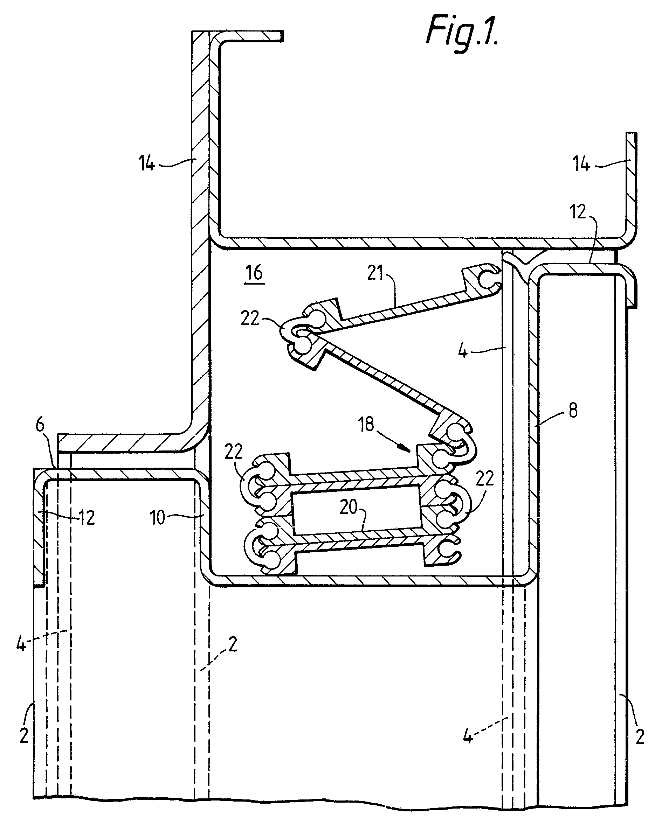

Referring to Figure 1 the rear corners of the trailer are fitted with pillars 2. Slotted within each pillar 2 and arranged to be raisable with respect to the pillar is a stake rail 4.

Mounted on and extending between the pillars 2, along the rear wall of the trailer, is a fixed header 6. The fixed header is shaped to have a central U shaped cross-section, one of the arms 8 of the U extending to more than twice the height of the other arm 10. Both arms, 8 and 10, are provided with an additional lip 12 of L-shaped cross-section.

Attached to the top of and extending between the stake rails 4 is a lifting header 14 which, when the roof is in the lowered position, rests upon the fixed header 6 and is so shaped in relation to the disproportionate arms 8 and 10 of the fixed header that a rectangular chamber 16 is created between the fixed and lifting headers, the function of which is to neatly contain the folding shutter 18.

The shutter 18 consists of plates 20 of reinforced PVC which extend between the corner pillars 2, the top plate 21 of which is attached to the stake rail 4 adjacent to its top end. The plates 20 (21) are joined along the whole of their length by flexible rubber hinges 22 which are moulded in a semi-circular 'folded' shape. The shape of the hinges causes the shutter 18 to be biased into a neatly folded condition within the chamber 16 when the roof is in its lowered position.

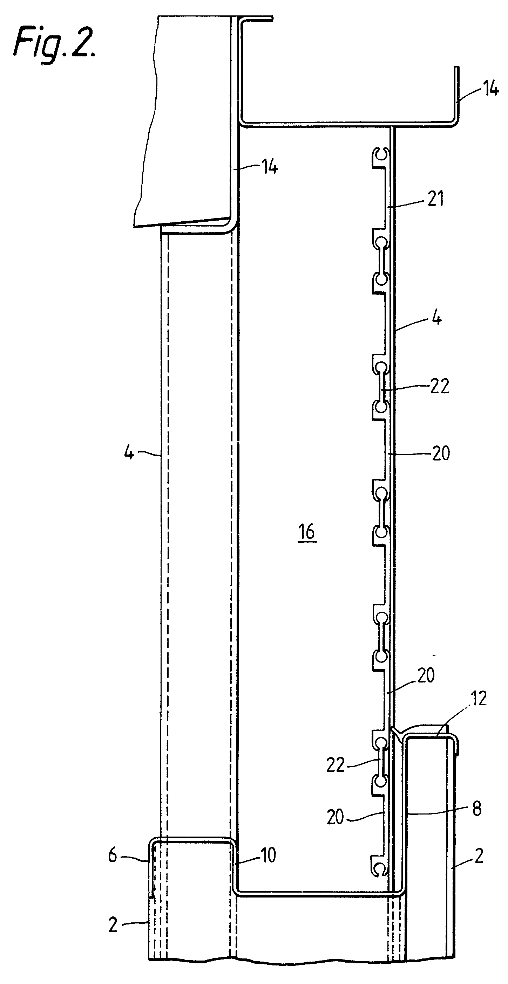

Referring to Figure 2, when the roof lifting mechanism is operated the stake rail 4 is raised relative to the pillar rail 2 and carries with it the lifting header 14 and top plate 21 of the shutter 18. The effect is to extend and unfold the shutter 18 into the flat condition shown in Figure 2 with the hinges 22 substantially straightened. The shutter 18 thus effectively expands to cover the gap between the rear wall and the roof when the roof is lifted. Because of the bias created by moulding the hinges 22 in their 'folded' position, the shutter will automatically fold correctly into the chamber 16 when the roof is lowered again.

## Claims

1. A trailer or semi-trailer having a roof which may be lifted from a lowered position to an upwardly extended position, the roof being supported at at least the four corners of the trailer by posts which are extendable up from the main body of the trailer on activation of a roof lifting mechanism characterised in that a folding shutter extends between the roof and the top of the rear wall of the trailer, the arrangement being such that the shutter extends to cover the gap at the rear of the trailer when the roof is in the raised position and contracts when the roof is lowered.

2. A trailer or semi-trailer as claimed in Claim 1, wherein the shutter is biased into the folded position.

3. A trailer or semi-trailer as claimed in either Claim 1 or 2 wherein the top of the folding shutter is attached at each end to the top of an extendable portion of the rear corner pillars of the trailer.

4. A trailer or semi-trailer as claimed in Claim 3 wherein the extendable portion of the rear corner pillars comprises a stake rail fitted within each pillar and arranged to be raised relative to the pillar, the stake rails engaging a lifting header running horizontally between them along the rear of the trailer, the lifting header supporting the roof.

5. A trailer or semi-trailer as claimed in Claim 4 wherein the lifting header rests upon a fixed header when the roof is in its lowered position with the stake rails retracted, the fixed header being supported by and extending between the rear corner pillars.

6. A trailer or semi-trailer as claimed in Claim 5 wherein the fixed and lifting header are so shaped and dimensioned that when the lifting header rests upon the fixed header, a chamber is created into which the shutter is neatly folded.

7. A trailer or semi-trailer as claimed in any of the preceding claims wherein the shutter comprises a plurality of plates joined by hinge members, each plate extending across the back of the trailer.

8. A trailer or semi-trailer as claimed in Claim 2 wherein the bias is created by moulding the hinges between the plates of the shutter, into the shape they assume when the shutter is folded so that they bias the shutter into the folded position.

*Fig.1.*

# Fig.2.

EP 0 314 529 A2

16 11 88